# EUROPEAN PATENT SPECIFICATION

(11) **EP 1 518 052 B1**
(45) Date of publication and mention of the grant of the patent: **11.07.2007**
(21) Application number: 03727972.6
(22) Date of filing: 22.05.2003
(51) Int. Cl.: F03B 13/14, F03D 11/04

(54) **OSCILLATING WATER COLUMN WAVE ENERGY CONVERTER INCORPORATED INTO CAISSON BREAKWATER**
IN WELLENBRECHER EINGEBAUTER WELLENENERGIEABSORBER NACH DEM PRINZIP DER SCHWINGENDEN WASSERSÄULE
CONVERTISSEUR D'ENERGIE D'ONDE PAR COLONNE D'EAU OSCILLANTE INCORPORE DANS UNE MACONNERIE DE BRISE-LAMES

(30) Priority: 28.06.2002 IT RC20020008
(43) Date of publication of application: 30.03.2005
(73) Proprietor: Boccotti, Paolo, 89060 Reggio Calabria (IT)
(72) Inventor: Boccotti, Paolo, 89060 Reggio Calabria (IT)
(86) International application number: PCT/IT2003/000310
(87) International publication number: WO 2004/003379

(56) References cited:
- GB-A- 2 080 437
- GB-A- 2 365 385
- US-A- 4 139 984
- US-B1- 6 194 791
- PATENT ABSTRACTS OF JAPAN vol. 008, no. 047 (M-280), 2 March 1984 (1984-03-02) & JP 58 200081 A (MITSUBISHI DENKI KK), 21 November 1983 (1983-11-21)

## Description

### Technical field

The invention discloses a caisson breakwater which is able to protect a port or a marine sheet of water with a small wave reflection, and is able to convert wave energy into electric power.

### Background art

Caisson breakwaters (see e.g. Goda Y., Random Seas and Design of Maritime Structures, World Scientific, chap. 4, 2000; or Boccotti P., Wave Mechanics for Ocean Engineering, Elsevier, chap. 13, 2000) consist of caissons in reinforced concrete close to each other or linked together, on a foundation on the seabed. Each caisson is subdivided into a number of cells by vertical walls. Typically the caissons are manufactured in dry docks, towed and sunk. The cells are filled with sand and/or gravel and/or concrete or other kind of ballast. Then a superstructure is cast in concrete.

Caisson breakwaters are excellent for protecting ports, because they can be built easily and are very resistant. The only flaw is that they reflect nearly all the incident wave energy, and, as a consequence, wave heights off the breakwater grow, and huge overtopping discharges occur. Of course, the wave amplification may be dangerous for boats and ships approaching a port, and the overtopping discharge may be dangerous for persons, facilities, and boats inside a port.

US patent 6,450,732 B1 has disclosed a submerged caisson on the seabed, with an air pocket and a vertical duct having the same width as the caisson. The upper opening of the vertical duct is beneath the sea level, and through this opening, the water alternately enters the caisson and exits from the caisson. The height of the air pocket inside the caisson is tuned with means for pumping or releasing air. Tuning is made so that the eigenperiod of free oscillations inside the caisson be close to the wave period. An embodiment of patent US 6,450,732 B1 comprises a self-rectifying turbine (e.g. a Wells turbine) that is a turbine whose direction of rotation does not change if the flow is reversed. This turbine is in a small section of the vertical duct and is driven by the high-speed water-flow in said duct

The plant disclosed by US Patent 6,450,732 B1 is an excellent absorber of wave energy, and it can be used very well to build submerged breakwaters with a very low environmental impact. These breakwaters are able to protect beaches from erosion, but they cannot protect a port because a part of the wave energy goes beyond these breakwaters. Moreover, the caisson of US Patent 6,450,732 B1, having an air pocket in pressure, needs a compressor, and needs control against air leakage. As a wave energy converter the caisson of US Patent 6,450,732 B1 has the turbine beneath the sea level, which implies some difficulty of maintenance and the need for a water-tight room for a generator.

Conventional wave energy converters known as OWCs (oscillating water columns) are widely described in the scientific literature. They may be coastline OWCs (see U.S. patent 5191225), breakwater OWCs (see Takahashi S. et al., Proc. 23rd Int. Conf. On Coastal Eng., 3440-3453, Amer. Soc. Civil Engineers, New York, 1992), or floating OWCs (see U.S. patent 6194791), according to whether they are installed on a coast, or in a caisson breakwater, or in a sinking structure. OWCs, essentially, consist of a box which rests on the seabed, with the roof above the sea level and with a large vertical opening in the main vertical wall (the one beaten by waves). This vertical opening extends from nearly the seabed to nearly the sea level, so that waves be able to propagate into the OWC. The air between the sea surface and the roof of the box, alternately, is compressed and expands because of the waves on the sea surface. An air-duct connects the OWC to the atmosphere, and a self-rectifying turbine is driven by an alternate air flow in said air-duct.

Thus, unlike the absorption device of the present invention which we are going to present, an OWC is not a U-conduit with an air pocket acting as a spring. Hence, an OWC cannot exploit a natural resonance where the eigenperiod of free oscillations in a U-conduit is equal to the wave period. This is why for improving the efficiency, some OWCs exploit a forced resonance with some complex devices for phase control in each individual wave (see Korde U.A. Applied Ocean Res. 13, 1991).

Summarizing, OWCs call for a large vertical opening in the main vertical wall so that their structure differs deeply from the compact structure of conventional caisson breakwaters. Moreover, to improve the efficiency, OWCs need some complex devices for phase control.

The objectives of the present invention are to make a caisson breakwater which:
(i) is suitable to protect a port;
(ii) reflects only a small share of the incident wave energy, and converts wave energy into electric power;
(iii) has turbines above the sea level, does not need means such as compressors, and does not need control against air leakage;
(iv) has an absorption device consisting of a U-conduit with an air pocket acting as a spring;
(v) does not need complex devices for phase control, given that it exploits a natural resonance where the eigenperiod of oscillations in the U-conduit is close to the wave period;
(vi) has the same compact structure and well-established building trade as conventional caisson breakwaters.

Lastly, we analyze the following documents.

Document GB 2080437A discloses a wave energy converter with a vertical duct (10) on the wave-beaten side; wherein said vertical duct (10) contains a water column (11), said vertical duct (10) is connected with the sea through a lower opening (not through an upper opening as in the present invention), said vertical duct (10) is connected with a room through an upper opening for air flow, above the sea level (not through a lower opening for water flow, beneath the sea level, as in the present invention); wherein said room is connected with the atmosphere through a duct with a turbine (16), and said room is provided with a U-tube (15) whose main function should be to maintain oscillations in the vertical duct (10) in phase with the wave motion (not to absorb wave energy).

Document US 4139984A discloses a wave energy converter which consists of a floating structure (not a fixed structure like a caisson breakwater). The turbine is driven by air and the air flow is caused by oscillations of the sea level in a chamber. These oscillations are due to the motion of sea waves and the motion of the floating structure (not only due to the motion of sea waves as in the present invention). The oscillating water mass is within vertical walls (not in a U-conduit).

Unlike the plant of the present invention, there are non-return valves to regulate the air flow.

Document GB 2365385A discloses an offshore structure for extracting wind, wave and tidal current energy, which supports some wind turbines (not a plant consisting of a caisson breakwater adapted for converting wave energy, and some wind turbines in the sheltered water sheet behind said breakwater, as in claim 6 of the present invention).

Document 047 (M-280) vol. 008 of Patent Abstracts of Japan discloses an OWC with a chamber being divided in a plurality of section's in the inward direction. Being an OWC, this converter is connected with the sea through a vertical opening extending from nearly the seabed (not trough a U-conduit).

Document US 6194791B1 discloses an offshore converter which is connected with the sea through inclined tubular sections whose mouths touch the seabed (not through a U-conduit). Unlike the caisson breakwater of the present invention, the aforesaid offshore converter, having the mouth at the bottom, needs provisional gates in order to float; said gates being removed after the converter is towed and sunk. The plant can be provided with a wind turbine preferably positioned at or near the top of the structure (not in the sheltered water sheet behind the structure, as in claim 6 of the present invention).

Document GB 1572086 discloses wave energy converters which drive water turbines (not air turbines as in the present invention). Some of the aforesaid converters consist of U-ducts with one end being connected with a air reservoir which remains nearly at constant pressure during a wave cycle (the air does not act as a spring, like in the present invention).

### Disclosure of the invention

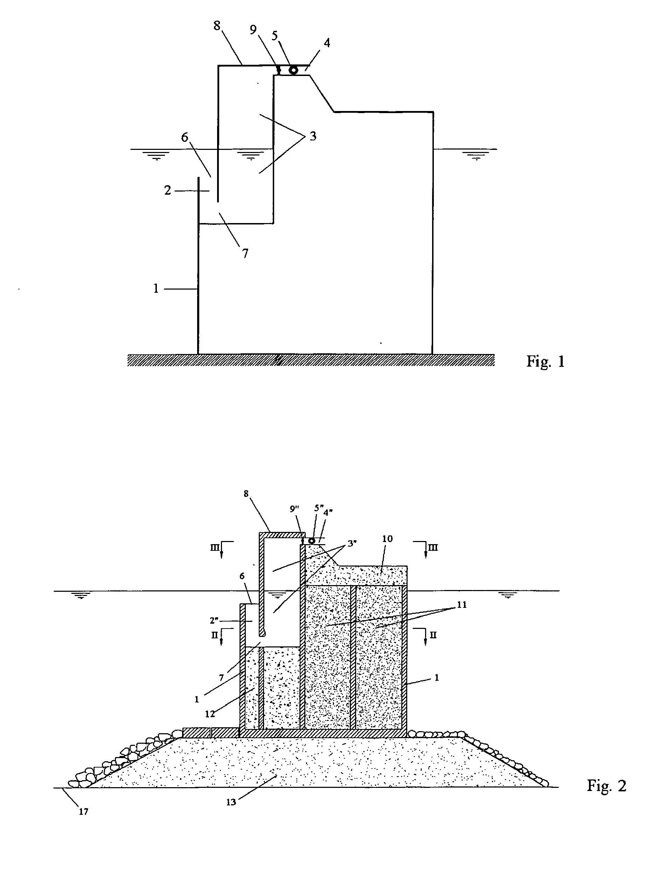

The objectives of the invention are obtained with a caisson breakwater whose caissons are made as shown in Fig.1. Specifically, a caisson 1 comprises:
(i) a vertical duct 2 which extends substantially along the whole caisson 1 and is connected with the sea through an upper opening 6;
(ii) a room 3 which extends substantially along the whole caisson and is connected with the vertical duct 2 through an opening 7; the base of said room 3 being beneath the sea level, and the roof 8 of said room 3 being above the sea level;
(iii) an air-duct 4 connecting the room 3 with the atmosphere;
(iv) a self-rectifying turbine 5 in the air-duct.

The fact that the vertical duct 2 is connected with the sea through an upper opening 6, and water can flow from the vertical duct 2 to the room 3 (and viceversa from the room 3 to the vertical duct 2) through a lower opening 7 beneath the sea level, and the fact that the room 3 (like the vertical duct 2) extends substantially along the whole caisson 1, and the fact that the room 3 is in part beneath the sea level and in part above the sea level, allow us to obtain a water mass oscillating in a U-conduit consisting of the vertical duct 2 and the room 3, wherein the air in the room 3 acts as a spring on said water mass. The eigenperiod of oscillations of the water mass in the U-conduit grows as:
(i) the width of the vertical duct 2 is reduced,
(iii) the length of the vertical duct 2 is increased,
(iv) the width and height of the room 3 is increased,
(v) the diameter of the air-duct 4 is increased.

The width and the length of the vertical duct 2, and the width and the height of the room 3 are fixed so that the eigenperiod be close to the wave period of the waves which convey the largest amount of energy in the course of a year. As an example basing ourselves on long-term wave statistics, we should fix an eigenperiod of about 6s for the plants in the Mediterranean Sea.

The plant of the present invention works as follows. Under wave action, pressure fluctuates on the outer opening 6 of the vertical duct 2. These pressure fluctuations cause oscillations of the water in the U-conduit which consists of the vertical duct 2 and the room 3. As a consequence the air in the room 3 is compressed and expands, and an alternate air flow is produced in air-duct 4. This air flow drives the self-rectifying turbine 5. Thus, waves do not propagate into the plant of the present invention, while, as said, waves propagate into OWCs.

Under resonance conditions, when the eingenperiod is close to the peak period of the wave spectrum of the sea state, we estimate that this plant is able to absorb up to the 80%÷90% of the incident wave energy, which means that the reflected wave energy is reduced to only the 10%÷20% of the incident wave energy. This estimate has been done through numerical simulations of random wind-generated waves (see Boccotti P., Wave Mechanics for Ocean Engineering, 2000, caps. 4 and 8).

As for the control, one must check that the water in the room 3 does not impact the roof 8. This event could occur in some extreme storm. When the water level in the room 3 exceeds some safety threshold, valve 9 must be closed. The water level in the room 3 may be measured by means of an ultrasonic probe attached to the roof 8. Given that the plant exploits a natural resonance there is no need at all for phase control. Finally, given that the average air pressure in the room 3 is equal to the atmospheric pressure, there is no need for control against air leakage, nor there is need for compressors.

Given that the plant exploits a natural resonance in a U-conduit, it needs only a relatively small horizontal-outer-opening 6. Moreover, the U-conduit (that is the vertical duct 2 and the room 3) can be well above the base of the caisson 1, so that we can fill the room beneath the U-conduit with concrete. That is why the caisson breakwater of the present invention has nearly the same compact structure as a conventional caisson breakwater.

### Brief description of drawings

The present invention will now be described for illustrative and not limitative purposes, with reference to the drawings in which:
Fig. 2 is a vertical cross-section of a first embodiment of a caisson of the breakwater according to the present invention, along plane I-I of Figs. 3 and 4;
Fig. 3 is a horizontal cross-section of the first embodiment of the present invention, along plane II-II of Fig. 2;
Fig. 4 is a horizontal cross-section of the first embodiment of the present invention, along plane III-III of Fig.2;
Fig. 5 is a vertical cross-section of a second embodiment of the present invention, along plane I-I of Figs.6 and 7;
Fig. 6 is a horizontal cross-section of the second embodiment of the present invention, along plane II-II of Fig. 5;
Fig. 7 is a horizontal cross-section of the second embodiment of the present invention, along plane III-III of Fig.5;
Fig. 8 is a vertical cross-section of a third embodiment of the present invention, along plane I-I of Figs.9 and 10;
Fig. 9 is a horizontal cross-section of the third embodiment of the present invention, along plane II-II of Fig. 8;
Fig. 10 is a horizontal cross-section of the third embodiment of the present invention, along plane III-III of Fig.8;

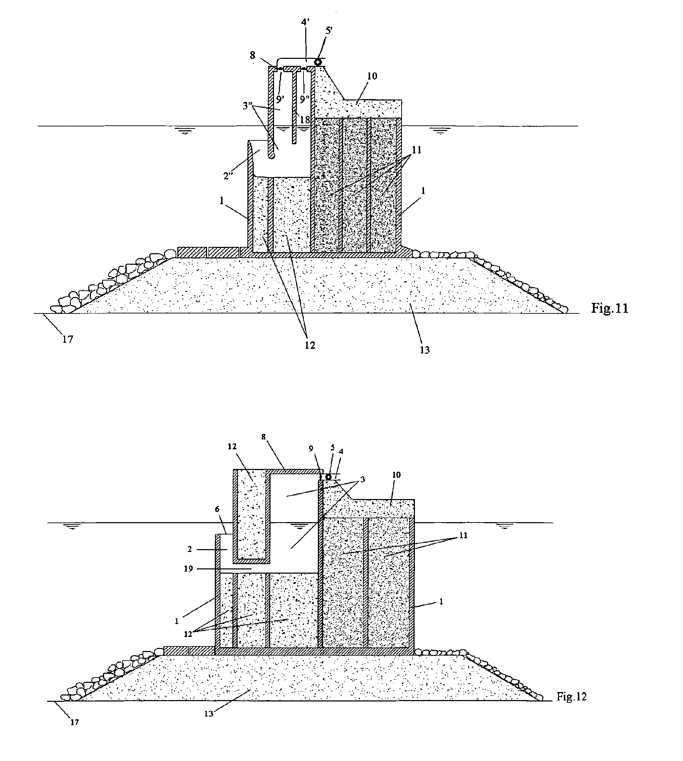

Fig. 11 is a vertical cross-section of a fourth embodiment;
Fig. 12 is a vertical cross-section of a fifth embodiment.

### Best way of carrying out the invention

The breakwater of the present invention consists of caissons close to each other or joined together, like a conventional caisson breakwater. Like caissons of a conventional caisson breakwater, the caissons of the breakwater of the present invention (see Figs. from 2 to 12) typically rest on a rubble mound foundation 13 on the seabed 17, and a caisson 1 of the breakwater consists of cells which are filled with sand and/or gravel 11 and/or concrete 12. Like in a conventional caisson breakwater, a superstructure 10 is cast in concrete above each caisson.

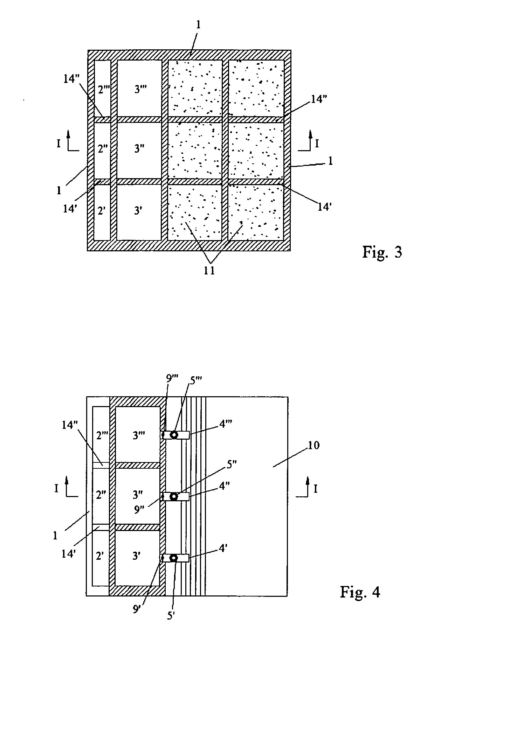

In a first embodiment (Figs. 2-3-4), some vertical stiffening-walls 14',14" subdivide the vertical duct into sections 2',2",2"', and subdivide the room 3 into cells 3',3",3'''. Each of said cells 3',3",3"' is connected with the atmosphere by its own air-duct 4',4",4"' with self-rectifying turbines (e.g. Wells turbines) 5',5'',5''' and valves 9',9'',9'''.

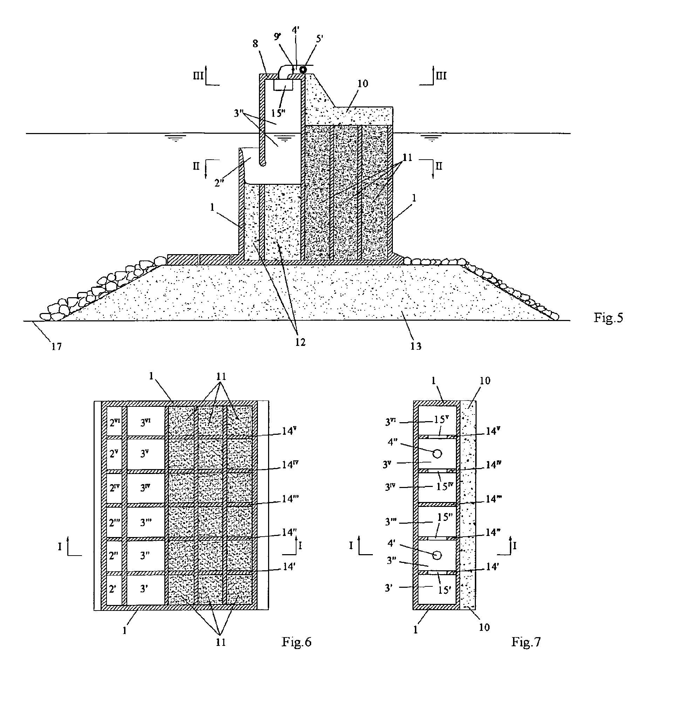

In a second embodiment (Figs. 5-6-7), the vertical walls 14',14'',14^{IV},14^{V} are provided with openings 15',15'', 15^{IV},15^{V}, near roof 8. Said openings let air flow from one to another of cells 3',3'',3''' and from one to another of cells 3^{IV},3^{V},3^{VI}.

The cells 3',3'',3''', are connected with the atmosphere through air-duct 4' with self rectifying turbine 5' and valve 9'; the cells 3^{IV},3^{V},3^{VI} are connected with the atmosphere through air-duct 4" with self-rectifying turbine 5'' (not seen) and valve 9" (not seen).

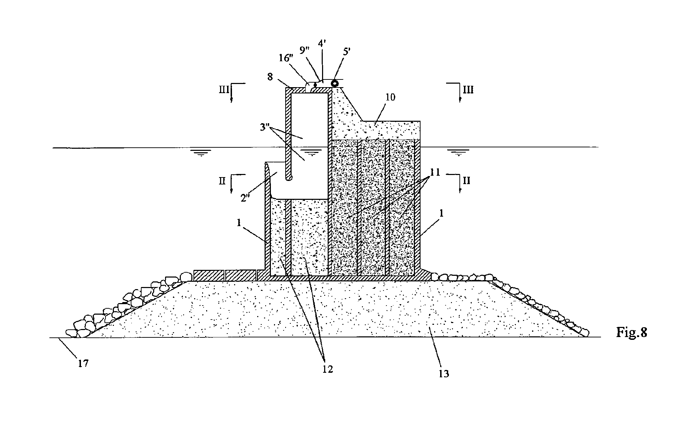

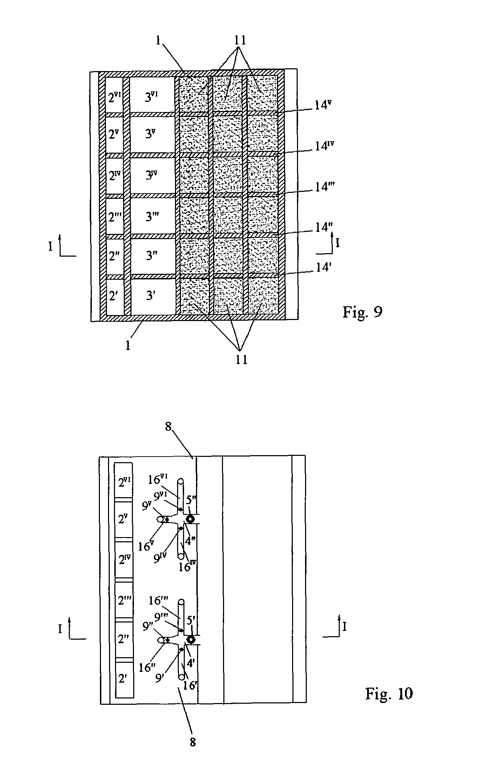

In a third embodiment (Figs. 8-9-10), there are no openings in the vertical walls 14',14'',14''',14^{IV},14^{V} and the cells 3',3",3"' are connected with the air-duct 4' through tubes 16',16'',16''' being provided with valves 9',9",9"', and the cells 3n^{IV},3^{V},3^{VI} are connected with air-duct 4" through tubes 16^{IV},16^{V},16^{VI} being provided with valves 9^{IV},9^{V},9^{VI}. The air-ducts 4' and 4" are connected with the atmosphere, and contain self-rectifying turbines 5',5".

A fourth embodiment is a more sophisticated version of the second embodiment, wherein there is a vertical septum which extends in height from the roof 8 downwards without reaching the base of the room 3. Closing the valve 9" in the air duct 4', the eigenperiod is reduced so that there is an increase of the production of electric power with wind waves of relatively small period.

In alternative (Fig. 12), in all the embodiments, the vertical duct 2 may be connected with the room 3 through a horizontal or sloping duct 19. The insertion of said horizontal or sloping duct 19 leads to an increase of the eigenperiod.

In the Oceans where the energy flux of waves is an order of magnitude greater than in the Mediterranean Sea, the breakwater of the present invention may be built for the only scope of producing electric power (not to protect a port).

A factory of green energy may consist of a caisson breakwater according to the present invention and a number of wind mills in the protected water sheet behind said breakwater. A first advantage of this factory is to eliminate the wave trust on the offshore wind mills. A second advantage is that a more regular production can be obtained. Indeed, even when there is no wind, the factory can produce electric power, exploiting the energy of swells.

### Industrial applicability

The caisson breakwater of the present invention has the same solid structure in reinforced concrete as a conventional caisson breakwater. Also the building trade is the same, and the overall size is nearly the same - typically, the width of a caisson breakwater of the present invention proves to be about 5% greater than the width of a conventional caisson breakwater, under the same safety factors against sliding and overturning, and under the same load on the foundation. The hydraulic apparatus is particularly simple - typically, it consists of a single turbine per caisson, with a diameter between 1m and 1.5m. Control is reduced to a minimum, given that the plant exploits a natural resonance in a U-conduit and does not call for phase control.

Notwithstanding the overall simplicity, the breakwater of the present invention has two important advantages over a conventional caisson breakwater. First, it converts part of the incident wave energy into electric power. Second, it reflects less wave energy. Our computations, based on numerical simulations of random wind-generated waves with some characteristic spectra, show that the breakwater of the present invention is able to absorb more than the 70% of the incident wave energy per year, and is able to convert into electric power more than one third of the absorbed energy. For this estimate use has been made of the plots of Curran and

Gato (Proc. Inst. Mech. Engrs. 211,1977) for the efficiency of a simple monoplane Wells turbine.

## Claims

1. A caisson breakwater wherein at least one caisson (1) of said caisson breakwater comprises a vertical duct (2), a room (3), and at least one air duct (4) connecting said room (3) with the atmosphere, and wherein said vertical duct (2) is on the wave beaten side of said caisson (1), said vertical duct (2) extends substantially along the whole caisson (1), said air duct, or air ducts, (4) comprises at least one turbine (5), **characterized in that** said vertical duct (2) is connected with the sea through an upper opening (6) beneath the sea level; said vertical duct (2) is connected with the room (3) through a lower opening (7) or through a horizontal or sloping duct (19); said room (3) extends substantially along the whole caisson (1); said room (3) is in part beneath the sea level and in part above the sea level.

2. The caisson breakwater according to claim 1, where the vertical duct (2) is subdivided into sections (2',2'',2''') and the room (3) is subdivided into cells (3',3'',3''') by vertical walls (14',14"), and where each of said cells (3',3'',3''') is connected with the atmosphere through at least one air duct (4',4'',4''') with a turbine (5',5'',5'''), and where the air ducts (4',4",4"') are provided with valves (9',9'',9''') or other closing devices.

3. The caisson breakwater according to claim 1, where the vertical duct (2) is subdivided into sections (27,2'',2''',2^{IV},2^{V},2^{VI}) and the room (3) is subdivided into cells (3',3'',3''',3^{IV},3^{V},3^{VI}) by vertical walls (14', 14'',14''', 14^{IV}, 14^{V}), where the air can circulate through the cells (3',3'',3''',3^{IV},3^{V},3^{VI}) or through groups or said cells, for example through openings (15', 15'',15^{IV},15^{V}) in the walls (14', 14'',14''',14^{IV}, 14^{V}), and the air in the cells (3',3'',3''',3^{IV},3^{V},3^{VI}) is connected with the atmosphere through at least one air-duct (4',4") being provided with turbines (5',5") and valves (9',9") or other closing devices.

4. The caisson breakwater according to claim 1, where the vertical duct (2) is subdivided into sections (2',2'',2''',2^{IV},2^{V},2^{VI}) and the room (3) is subdivided into cells (3',3'',3''',3^{IV},3^{V},3^{VI}) by vertical walls (14',14'',14''',14^{IV},14^{V}), with the cells (3',3'',3''',3^{IV},3^{V},3^{VI}) being connected with the atmosphere through tubes (16',16'',16''',16^{IV},16^{V},16^{VI}) which join (directly or with some interposed distribution frames) at least one air-duct (4',4'') being provided with turbines (5',5''), and where the tubes (16',16'',16''',16^{IV},16^{V},16^{VI}) are provided with valves (9',9'',9''',9^{IV},9^{V},9^{VI}) or other closing devices.

5. The caisson breakwater according to claim 2 wherein the room (3) is provided with a vertical septum (18), and where said septum (18) extends for all the width of the room (3) and extends in height from the roof (8) downwards without reaching the base of said room (3).

6. A factory of green power, **characterized in that** said factory consists of the caisson breakwater according to claims 1 or 2 or 3 or 4 or 5, and a number of wind mills in the protected water-sheet behind said caisson breakwater.

7. The caisson breakwater according to claim 1 or 2 or 3 or 4 or 5 without the turbines, for converting the sea wave motion into a form more suited for conversion.

## Patentansprüche

1. Ein Senkkasten-Wellenbrecher, bei dem mindestens ein Senkkasten (1) des genannten Senkkasten-Wellenbrechers eine vertikale Leitung (2), einen Raum (3) und mindestens eine Luftleitung (4) umfasst, die den genannten Raum (3) mit der Umgebungsluft verbindet und wobei die genannte vertikale Leitung (2) sich auf der von der Welle getroffenen Seite des genannten Senkkastens (1) befindet, die vertikale Leitung (2) sich über den gesamten Senkkasten (1) erstreckt und die genannte Luftleitung oder Luftleitungen (4) mindestens eine Turbine (5) umfasst, **dadurch kennzeichnet, dass** die genannte vertikale Leitung (2) über eine obere Öffnung (6) unter dem Meeresspiegel mit der See verbunden ist; die genannte vertikale Leitung (2) mit dem Raum (3) durch eine untere Öffnung (7) oder durch eine horizontale oder eine schräge Leitung (19) verbunden ist; der Raum (3) sich im Wesentlichen über den gesamten Senkkasten (1) erstreckt; der genannte Raum (3) sich zum Teil über, zum Teil unter dem Meeresspiegel befindet.

2. Ein Senkkasten-Wellenbrecher laut Anspruch 1, wobei die vertikale Leitung (2) in Abschnitte (2',2",2''') und der Raum (3) durch vertikale Wände (14',14") in Zellen (3',3",3''') unterteilt sind und wo jede der besagten Zellen (3',3",3''') durch mindestens eine Luftleitung (4',4",4''') mit einer Turbine (5',5",5''') mit der Außenluft verbunden ist und wobei die Luftleitungen (4',4",4''') mit Ventilen (9',9",9''') oder anderen Verschlussvorrichtungen versehen sind.

3. Ein Senkkasten-Wellenbrecher laut Anspruch 1, wobei die vertikale Leitung (2) in die Abschnitte (2',2",2''',2^{IV},2^{V},2^{VI}) unterteilt ist und der Raum (3) durch vertikale Wände (14',14",14''',14^{IV},14^{V}) in Zellen (3',3",3''',3^{IV},3^{V},3^{VI}) aufgeteilt ist, wobei die Luft durch die Zellen (3',3",3''',3^{IV},3^{V},3^{VI}) oder durch Zellengruppen strömen kann, z.B. durch Öffnungen (15', 15'',15^{IV},15^{V}) in den Wänden (14', 14'',14''',14^{IV}, 14^{V}), und die Luft in den Zellen (3',3'',3''',3^{IV},3^{V},3^{VI}) durch mindestens eine Luftleitung (4',4") mit Turbinen (5',5") und Ventilen (9',9") oder andern Verschlussvorrichtungen an die Umgebungsluft angeschlossen ist.

4. Ein Senkkasten-Wellenbrecher laut Anspruch 1, wobei die vertikale Leitung (2) in die Abschnitte (2',2'',2''',2^{IV},2^{V},2^{VI}) unterteilt ist und der Raum (3) durch die vertikalen Wände (14',14'',14''',14^{IV},14^{V}) in Zellen (3',3'',3''',3^{IV},3^{V},3^{VI}) unterteilt ist; die Zellen (3',3'',3''',3^{IV},3^{V},3^{VI}) durch Röhren (16',16'',16''',16^{IV},16^{V},16^{VI}) mit der Außenluft verbunden sind, wobei die Röhren (16',16'',16''',16^{IV},16^{V},16^{VI}) (direkt oder mit einigen zwischengesetzten Verteilergestellen) mindestens eine Luftleitung (4',4") erreichen, die mit Turbinen (5',5'') versehen ist, und wobei die Rohre (16',16'',16''', 16IV, 16V , 16VI) mit Ventilen (9',9'',9''',9^{IV},9^{V},9^{VI}) oder anderen Verschlussvorrichtungen versehen sind.

5. Ein Senkkasten-Wellenbrecher laut Anspruch 2, wobei der Raum (3) mit einer vertikalen Trennwand (18) versehen ist und die Trennwand (18) sich über die gesamte Raumbreite und in der Höhe vom Dach (8) nach unten erstreckt, ohne dabei den Boden des besagten Raums (3) zu erreichen.

6. Ein Kraftwerk für erneuerbare Energie, **dadurch gekennzeichnet, dass** das besagte Kraftwerk aus dem Senkkasten-Wellenbrecher laut einer der Anspruchen 1, 2, 3, 4 oder 5 und aus einer Reihe von Windkraftwerken in dem geschützten Wasserabschnitt hinter dem besagten Senkkasten-Wellenbrecher besteht.

7. Ein Senkkasten-Wellenbrecher laut Anspruch 1 oder 2 oder 3 oder 4 oder 5 ohne Turbinen, zum Umwandeln der Meeresbewegung in eine für die Umwandlung geeignetere Form.

## Revendications

1. Brise-lames en caissons, dans lequel un caisson (1) au moins dudit brise-lames en caissons comprend un conduit vertical (2), une chambre (3) et au moins un conduit d'aération (4) raccordant ladite chambre (3) à l'atmosphère, et dans lequel ledit conduit vertical (2) se situe du côté dudit caisson (1) battu par la houle ; ledit conduit vertical (2) s'étend principalement le long de tout le caisson (1) ; ledit conduit d'aération, ou lesdits conduits d'aération (4), comprend (comprennent) au moins une turbine (5), **caractérisé en ce que** ledit conduit vertical (2) est relié à la mer par une ouverture supérieure (6) placée au-dessous du niveau de la mer ; ledit conduit vertical (2) est relié à la chambre (3) par une ouverture inférieure (7) ou par un conduit horizontal ou incliné (19) ; ladite chambre (3) s'étend principalement le long de tout le caisson (1) ; ladite chambre (3) est en partie au-dessous du niveau de la mer et en partie au-dessus du niveau de la mer.

2. Brise-lames en caissons selon la revendication n° 1, dans lequel le conduit vertical (2) est divisé en sections (2',2'',2''') et la chambre (3) est divisée en cellules (3',3'',3''') par des cloisons verticales (14',14"), et dans lequel chacune des dites cellules (3',3'',3''') est reliée à l'atmosphère par au moins un conduit d'aération (4',4",4"') doté d'une turbine (5',5'',5'''), et dans lequel les conduits d'aération (4',4",4"') sont dotés de clapets (9',9",9"') ou d'autres dispositifs de fermeture.

3. Brise-lames en caissons selon la revendication n° 1, dans lequel le conduit vertical (2) est divisé en sections (2',2'',2''',2^{IV},2^{V},2^{VI}) et la chambre (3) est divisée en cellules (3',3'',3''',3^{IV}3^{V}3^{VI}) par des cloisons verticales (14',14'',14''',14^{IV}, 14^{V}); où l'air peut circuler à travers les cellules (3',3'',3''',3^{IV},3^{V},3^{VI}) ou à travers des groupes des dites cellules, par exemple grâce à des ouvertures (15',15'',15^{IV},15^{V}) aménagées dans les cloisons (14',14'',14''',14^{IV},14^{V}), et où l'air se trouvant dans les cellules (3',3'',3''',3^{IV},3^{V},3^{VI}) est relié à l'atmosphère par au moins un conduit d'aération (4',4") équipé de turbines (5',5") et de clapets (9',9") ou d'autres dispositifs de fermeture.

4. Brise-lames en caissons selon la revendication n° 1, dans lequel le conduit vertical (2) est divisé en sections (2',2",2''',2^{IV},2^{V},2^{VI}) et la chambre (3) est divisée en cellules (3',3",3''',3^{IV},3^{V},3^{VI}) par des cloisons verticales (14',14",14''',14^{IV},14^{V}), où les cellules (3',3",3''',3^{IV},3^{V},3^{VI}) sont reliées à l'atmosphère par des tubes (16',16",16''',16^{IV},16^{V},16^{VI}) rejoignant (directement ou par l'entremise de répartiteurs) au moins un conduit d'aération (4',4") équipé de turbines (5',5"), et dans lequel les tubes (16',16",16''',16^{IV},16^{V},16^{VI}) sont dotés de clapets (9',9",9''',9^{IV},9^{V},9^{VI}) ou d'autres dispositifs de fermeture.

5. Brise-lames en caissons selon la revendication n° 2, dans lequel la chambre (3) est dotée d'une cloison verticale (18), et dans lequel ladite cloison (18) s'étend sur toute la largeur de la chambre (3) et, en hauteur du toit (8) vers le bas sans atteindre le sol de la chambre (3).

6. Usine d'énergie renouvelable, **caractérisée en ce que** ladite usine consiste en un brise-lames en caissons selon une revendication quelconque parmi les revendications allant de 1 à 5, et en un certain nombre d'éoliennes situées dans la nappe protégée, derrière ledit brise-lame en caissons.

7. Brise-lames en caissons selon une revendication quelconque parmi les revendications allant de 1 à 5 sans turbines, pour transformer le mouvement ondulatoire de la houle en une forme plus adaptée à sa conversion.
